# FASCICULE DE BREVET EUROPEEN

(11) **EP 3 994 376 B1**
(45) Date de publication et mention de la délivrance du brevet: **09.08.2023**
(21) Numéro de dépôt: 20730268.8
(22) Date de dépôt: 04.06.2020
(51) Int. Cl.: F16H 61/04, F16H 61/02, F16H 61/16

(54) **PROCEDE DE CONTROLE DE LA CIBLE D'UNE TRANSMISSION AUTOMATIQUE DE VEHICULE**
VERFAHREN ZUR STEUERUNG DES ZIELS EINES FAHRZEUGAUTOMATIKGETRIEBES
METHOD FOR CONTROLLING THE TARGET OF A VEHICLE AUTOMATIC TRANSMISSION

(30) Priorité: 04.07.2019 FR 1907455
(43) Date de publication de la demande: 11.05.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: LEFEVRE, Aurelien, 92340 Bourg la Reine (FR)
(74) Mandataire: Renault Group
(86) Numéro de dépôt international: PCT/EP2020/065425
(87) Numéro de publication internationale: WO 2021/001111

(56) Documents cités:
- EP-A1- 3 299 236
- DE-A1-102004 043 345
- DE-C1- 19 714 852

## Description

La présente invention concerne les changements d'état de la chaîne cinématique d'un véhicule, équipé d'une transmission automatique à rapports discrets, et de sources de traction électriques et thermiques, pouvant fournir un couple de traction aux roues, simultanément ou individuellement.

Plus précisément, elle a pour objet un procédé de contrôle de la cible d'une transmission automatique de véhicule au cours de la réalisation par celle-ci d'un état de la chaîne cinématique du véhicule, préalablement consolidé comme cible.

Sur un véhicule équipé d'une transmission automatique à rapports discrets, qu'il soit électrique, hybride, ou thermique, les états de sa chaîne cinématique sont définis comme étant des combinaisons de(s) coupleur(s) et de réducteur(s) spécifiques à l'architecture du véhicule concerné. Les phases de changement d'état, au cours desquelles un nouvel état de la chaîne cinématique est réalisé, sont des phases complexes, où un ensemble d'actionneurs doit réaliser le plus rapidement possible grâce à l'intervention de fourchettes, de coupleurs, de générateurs de couple, etc., ce nouvel état de la chaîne cinématique, qui est l'état cible de la transmission, tout en garantissant une prestation de qualité maximale.

Tout changement de cible d'état au cours de la réalisation d'un état de la chaîne cinématique interrompt une séquence d'opérations spécifiques à la réalisation de la cible initiale, pour débuter une nouvelle séquence spécifique à la réalisation de la nouvelle cible. L'interruption de la réalisation d'un état en cours, modifie le comportement de chacun des actionneurs de la chaîne cinématique. Ces modifications allongent le plus souvent le temps de réalisation global des opérations, avec une perte de prestation pour les usagers du véhicule, telle que l'apparition de bruits de claquement, ou des chocs. De manière générale, la qualité de réalisation d'un état se dégrade, par un allongement de sa durée, et une perte de réactivité globale.

Les méthodes habituelles de contrôle autorisent les transmissions automatiques à changer de cible au cours de la réalisation d'un état, uniquement pour des raisons de performance, sans véritablement prendre en considération les incidences de tels changements sur la prestation globale de la transmission et du véhicule.

Par la publication US 8,944,957, on connaît un procédé de commande de transmission automatique, autorisant l'élimination d'une cible en cours de réalisation, à la suite d'une augmentation de la requête de couple du conducteur, sans rechercher d'autres critères.

La publication US 9,416,869 décrit une autre méthode, prévoyant d'adopter en cours d'opération une nouvelle cible d'état pour répondre à un changement de requête du conducteur, ou à un changement de niveau de freinage. Toutefois, cette méthode ne prévoit pas davantage que la précédente, de remettre en cause un changement de cible, en fonction des circonstances de son élimination, ou de l'incidence du changement sur la prestation offerte. On connaît de plus de EP 3 299 236 un procédé de contrôle de la cible d'une transmission automatique.

La présente invention vise à diminuer la fréquence des changements de cible en cours de réalisation d'un état de la chaîne cinématique d'un véhicule, tout en améliorant la réactivité du véhicule lorsqu'une substitution de cible est requise, de manière à améliorer la prestation globale du véhicule.

Dans ce but, elle propose que la durée de consolidation nécessaire pour que la substitution d'un état devenu optimal pour la chaîne cinématique arrivant postérieurement au début de la réalisation en cours, à une cible en cours de réalisation, soit autorisée, est déterminée en fonction de la cause d'élimination de la cible en cours de réalisation.

De préférence, la cause d'élimination d'une cible consolidée est prise en considération au travers de la valeur d'un paramètre de réglage.

Cette stratégie permet de « consolider » une nouvelle cible d'état de la chaîne cinématique lorsqu'un changement d'état vers une première cible est déjà en cours de réalisation. Cet objectif est atteint, soit en optimisant la réactivité de la transmission si l'interruption du changement d'état en cours est effectivement requise, soit en optimisant la qualité de réalisation d'un d'état par un séquencement approprié de substitution de cibles.

La présente invention sera mieux comprise à la lecture de la description suivante d'un mode de réalisation non limitative de celle-ci, en se reportant aux dessins annexés.
[Fig. 1]est un logigramme de la stratégie développée.
[Fig. 2] en est un premier chronogramme.
[Fig. 3] en est un deuxième chronogramme.

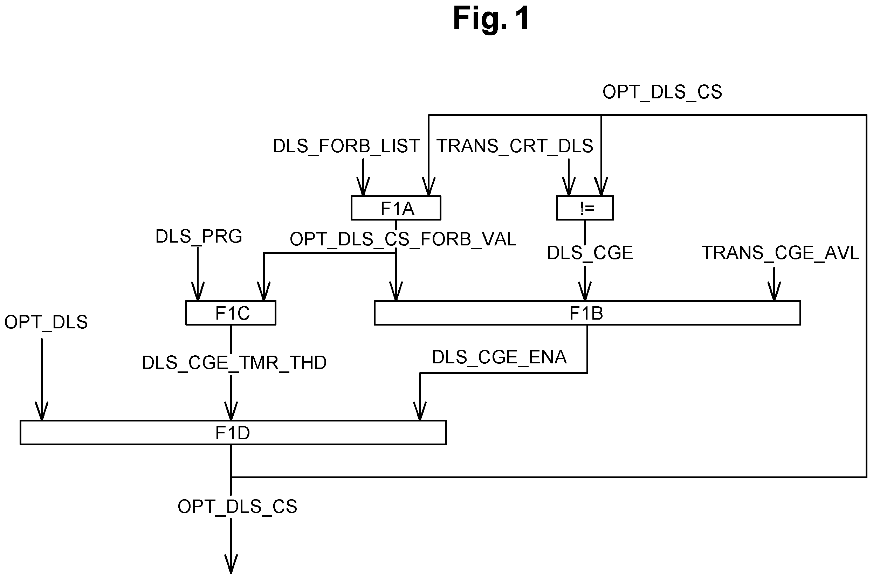

Le procédé illustré par la figure 1 se base sur les données suivantes :
- *TRANS_CGE_AVL,* est l'autorisation de changement de cible, émis par la transmission pour éviter des changements de cible pendant des phases critiques (crabotage en cours, etc.) ;
- *TRANS_CRT_DLS* est l'état courant de la transmission ;
- *OPT_DLS* est l'état optimal du point de vue de la consommation, de la pollution et de l'agrément, en dehors des contraintes d'interruption de séquence *;DLS_FORB_LIST* est un vecteur déterminant la cause de l'élimination de chaque état ; sa dimension correspond au nombre d'états disponibles sur le véhicule ; sa valeur minimum est 0, sa valeur maximum est X ; chaque valeur traduit la raison précise d'élimination d'un état : à la valeur 0, l'état concerné n'est pas interdit, à la valeur W il est éliminé par exemple pour des raisons de fiabilité, à la valeur Y, il est interdit par exemple pour des raisons de contraintes NVH (pour *Noise Vibration and Harshness*) ; ce vecteur permet de sélectionner l'état optimal d'un point de vue de consommation, de pollution, et d'agrément ;
- *DLS_PRG,* est une entrée supplémentaire, orientant le choix de l'état optimal en fonction du type de comportement souhaité par le conducteur (dynamique, économique, normal, électrique, etc.), ou en réponse à l'activation d'un conducteur virtuel introduisant un choix différent de jeux de paramétrages pour sélectionner l'état optimal ;
- *OPT_DLS_CS,* est la cible d'état consolidée, émise en direction de la fonction de réalisation de l'état chaîne cinématique dans la transmission ; son émission vaut instruction de sortie de la stratégie.

La figure 1 regroupe un enchaînement de fonctions, appelées F1A, F1C, F1D, et F1B, formant le procédé l'invention, dont l'objet est de contrôler la cible d'une transmission automatique de véhicule au cours de la réalisation par celle-ci d'un état de la chaîne cinématique du véhicule préalablement consolidé comme cible *OPT_DLS_CS.*

La fonction F1A détermine la cause de l'élimination de l'état cible consolidé *OPT_DLS_CS* en cours de réalisation ; la cause d'élimination *OPT_DLS_CS_FORB_VAL* est extraite du vecteur *DLS_FORB_LIST* regroupant les causes d'élimination de l'ensemble des états de la chaîne cinématique ; à chaque cause possible est attribuée une valeur *OPT_DLS_CS_FORB_VAL,* pouvant aller de 0 à X, qui représente cause de l'élimination.

A partir de la valeur *OPT_DLS_CS_FORB_VAL* de la cause d'élimination de l'état consolidé *OPT_DLS_CS* et de l'entrée supplémentaire *DLS_PRG,* la fonction F1C définit une durée de consolidation *DLS_CGE_TMR_THD,* qui est la durée nécessaire pour que la substitution d'un état *OPT_DLS* devenu optimal pour la chaîne cinématique postérieurement au début de la réalisation en cours, à une cible consolidée *OPT_DLS_CS* en cours de réalisation soit autorisée. Cette durée est déterminée en fonction de la cause d'élimination *OPT_DLS_CS_FORB_VAL* de la cible *OPT_DLS_CS* en cours de réalisation.

La durée *DLS_CGE_TMR_THD* est définie par une opération dite de « typage » appelée *PRG_DLS,* au travers d'une table paramétrable. La cause d'élimination *OPT_DLS_CS_FORB_VAL* d'une cible consolidée *OPT_DLS_CS* est prise en considération au travers de la valeur d'un paramètre de réglage *DLS_CGE_ENA_FORB_XX.*

Un autre paramètre de réglage appelé *DLS_NO_TMR_FORB_XX* est défini pour chacune des valeurs possibles (au nombre de X + 1) de la cause d'élimination d'état *OPT_DLS_CS_FORB_VAL.* Ce paramètre traduit le niveau de pertinence d'une « non application » de la durée nominale de consolidation *DLS_CGE_TMR_NOM,* correspondant à la cause *OPT_DLS_CS_FORB_VAL* de valeur XX, qui a été identifiée. Le paramètre *DLS_NO_TMR_FORB_XX* prend la valeur 1 si la cause d'élimination associée est prioritaire, et la valeur 0 si la cause d'élimination associée n'est pas prioritaire.

La cause d'élimination est prioritaire, si elle porte sur la fiabilité, par exemple un surrégime du moteur thermique, ou une contrainte de respect d'une requête de couple à la roue d'un conducteur réel ou virtuel. Ceci notamment, lorsqu'une forte réactivité du système est attendue pour améliorer la durée globale de réactivité du groupe moto propulseur, et la prestation du véhicule.

La cause d'élimination associée n'est pas prioritaire, par exemple si c'est une raison de bruit, comme un régime du moteur thermique trop élevé, ou si une forte réactivité n'est pas attendue de la transmission. Également, si le désagrément ressenti n'a pas d'impact important sur la réactivité ou sur la prestation du véhicule.

Dans le cas où un état consolidé *OPT_DLS_CS* est éliminé pour une cause *Y,* et où le paramètre de réglage *DLS_NO_TMR_FORB_Y* a la valeur 0, la durée de consolidation *DLS_CGE_TMR_THD* de l'état optimal *OPT_DLS* est une durée nominale *DLS_CGE_TMR_NOM.*

Dans le cas où un état consolidé *OPT_DLS_CS* est éliminé pour une raison *W,* et où le paramètre de réglage *DLS_NO_TMR_FORB_W* est égal à 1, la durée de consolidation *DLS_NO_TMR_FORB_W* de de l'état optimal *OPT_DLS* prend sa valeur la plus faible *DLS_CGE_TMR_MIN.*

Cette méthode d'élaboration de la durée de consolidation *DLS_CGE_TMR_THD* de l'état optimal, permet d'obtenir le niveau de réactivité le mieux adapté aux besoins du groupe motopropulseur, et donc à la prestation offerte par le véhicule.

La fonction F1B établit l'autorisation de changement de la cible d'état consolidée *OPT_DLS_CS* pour adopter comme cible l'état optimal *OPT_DLS.* Cette autorisation est appelée *DLS_CGE_ENA.*

Pour chacune des valeurs possibles du paramètre représentant la cause d'élimination *OPT_DLS_CS_FORB_VAL* (X+1 au total), on définit un paramètre de réglage nommé *DLS_CGE_ENA_FORB_XX.* Ce paramètre traduit le fait que la cible consolidée *OPT_DLS_CS* peut être éliminé au profit de la cible optimale *OPT_DLS,* pour une cause d'élimination *OPT_DLS_CS_FORB_VAL* dont la valeur associée est *XX.*

L'autorisation de changement *DLS_CGE_ENA* est effective, si l'ensemble des conditions suivantes sont remplies :
- la transmission autorise l'émission d'une nouvelle cible : *TRANS_CGE_AVL = VRAI ;*
- un changement d'état chaîne cinématique est en cours de réalisation ; cette condition vérifiée en cas de différence entre l'état courant de la transmission *TRANS_CRT_DLS* et la cible d'état consolidée *OPT_DLS_CS ;*
- la cause d'élimination de la cible consolidée *OPT_DLS_CS,* est prioritaire, car le paramètre *DLS_CGE_ENA_FORB_Y* est à 1, ce qui signifie qu'un changement de cible doit être effectué.

Si aucun changement d'état n'est en cours de réalisation, *OPT_DLS_CS = TRANS_CRT_DLS.* Dans ce cas L'autorisation de changement d'état chaîne cinématique cible *DLS_CGE_ENA* est donnée.

La fonction F1D élabore la consigne d'état chaîne cinématique cible consolidée *OPT_DLS_CS* à partir de :
- l'état chaîne cinématique optimal *OPT_DLS,*
- l'autorisation de changement de cible d'état chaîne cinématique *DLS_CGE_ENA,*
- et la durée minimale de consolidation de l'état chaîne cinématique optimal *DLS_CGE_TMR_THD.*

La cible consolidée *OPT_DLS_CS* prend la valeur de l'état optimal *OPT_DLS,* si l'ensemble des conditions suivantes sont remplies :
- l'autorisation de changement d'état est active : *DLS_CGE_ENA = VRAI ;*
- l'état optimal *OPT_DLS* garde une valeur constante pendant la durée minimale de consolidation *DLS_CGE_TMR_THD* ; la durée prise en compte, est remise à 0 dans le cas où l'autorisation de changement d'état chaîne cinématique n'est plus active.

Dans cette méthode, la consigne de cible consolidée *OPT_DLS_CS* est élaborée à partir de :
- l'état optimal *OPT_DLS* de la chaîne cinématique,
- l'autorisation de changement de cible d'état chaîne cinématique *DLS_CGE_ENA,* et
- la durée minimale de consolidation *DLS_CGE_TMR_THD* de l'état optimal *OPT_DLS* de la chaîne cinématique.

Grâce à ces mesures, on parvient à :
- autoriser la substitution de cibles en cas de réelle nécessité, de manière à optimiser la réactivité du système : *DLS_CGE_ENA* = *VRAI,* avec une durée de consolidation de l'état optimal réduite : *DLS_CGE_TMR_THD = DLS_CGE_TMR_MIN,* ou au contraire,
- sans interrompre la réalisation en cours, de manière à optimiser la qualité des passages par en interdisant l'adoption de nouvelles cibles : DLS_CGE_ENA = *FAUX.*

En conclusion l'invention permet d'élaborer une cible d'état consolidée et optimisée *OPT_DLS_CS,* en particulier lorsqu'un changement d'état de la chaîne cinématique du véhicule est déjà en cours de réalisation, tout en préservant la qualité des passages.

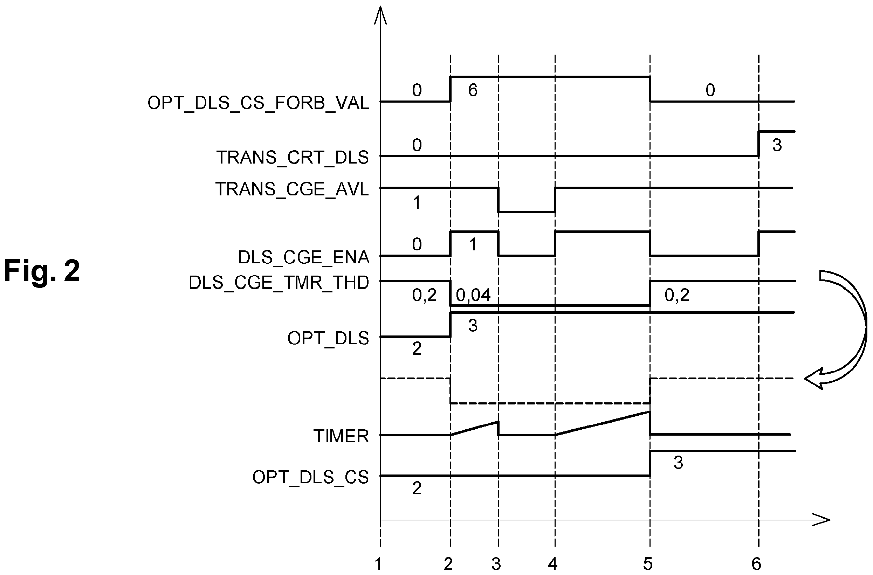

A travers l'ensemble de ces fonctions, la prestation du véhicule est grandement améliorée, soit par l'interdiction de changement d'état chaîne cinématique lors d'une réalisation pour une raison non prioritaire, soit par l'optimisation du temps de consolidation de l'état chaîne cinématique lorsqu'un changement de cible d'état chaîne cinématique est requis pendant une réalisation déjà en cours. La figure 2 illustre le déroulement de la stratégie, dans un cas d'autorisation de changement d'état cible consolidé (optimisation du temps de réactivité).

A la date initiale T1, un changement d'état de la chaîne cinématique est en cours : *TRANS_CRT_DLS =* 1 ; l'état optimal de la chaîne cinématique *DLS_OPT* est égal à la cible consolidée *OPT_DLS_CS* qui a la valeur 2.

A la date T2, la cible consolidée, *OPT_DLS_CS* (égale à 2), est éliminée pour une cause *OPT_DLS_CS_FORB_VAL* de valeur 6, relative à la fiabilité, telle qu'une possible mise en surrégime du moteur thermique sur celle-ci. L'état optimal *OPT_DLS* passe de la valeur 2 à 3.

L'autorisation de changement de cible en cours de réalisation est active (*TRANS_CGE_AVL = VRAI*)*,* et le paramètre *DLS_CGE_ENA_FORB_6* vaut 1 ; l'état optimal *OPT_DLS* est consolidé. Le paramètre *DLS_NO_TMR_F0RB_6* prend par exemple la valeur 1, et la durée minimale de consolidation *DLS_CGE_TMR_MIN* est paramétrée par exemple à 0.04s ; la durée nominale de consolidation *DLS_CGE_TMR_NOM* est par exemple de 0.2s. La paramètre DLS_NO_TMR*_FORB* prenant la valeur 1, la durée de consolidation *DLS_CGE_TMR_THD* prend alors la valeur de DLS*_*CGE*_TMR_MIN,* égale à 0.04s.

L'incrémentation de la durée de consolidation *TIMER* est initiée.

Entre les dates T2 et T3, l'autorisation de changement de cible *DLS_CGE_ENA* est effective ; tout au long de cette étape, la durée de consolidation *TIMER* est incrémentée.

Entre les dates T3 à T4, l'autorisation de changement de cible émis par la transmission *TRANS_CGE_AVL* devient *FAUX* et le reste jusqu'à la date T4, impliquant l'impossibilité de changer de cible. Durant cette phase le *TIMER* est remis et maintenu à 0 : la cible *OPT_DLS_CS* conserve sa valeur 2.

A la date T4, l'autorisation de changement de cible émise par la transmission, devient à nouveau vrai (*TRANS_CGE_AVL = VRAI*) ; le paramètre *DLS_CGE_ENA_FORB_6* est paramétré à 1 ; l'autorisation de changement de cible en cours de réalisation d'un état devient alors à nouveau effective (*DLS_CGE_ENA=VRAI*) ; l'état optimal *OPT_DLS* est consolidé. L'incrémentation de la durée de consolidation *TIMER* est à nouveau initiée.

A la date T5, le *TIMER* atteint la durée minimale de consolidation *DLS_CGE_TMR_THD* ; cette étape entraîne la mise à jour de la cible d'état consolidée *OPT_DLS_CS* avec la valeur de l'état optimal *OPT_DLS,* qui est de 3. La transmission reçoit alors l'ordre d'interrompre sa réalisation en cours, pour adopter la nouvelle cible *OPT_DLS_CS.*

La valeur attribuée à la raison d'élimination *OPT_DLS_CS_FORB_VAL,* mise à jour par la nouvelle cible consolidée *OPT_DLS_CS,* passe dans cet exemple de la valeur 6 à 0 (où l'état consolidé *OPT_DLS_CS =* 3 n'est pas interdit) ; *DLS_CGE_ENA* et *DLS_CGE_TMR_THD* sont respectivement mis à jour par les paramètres *DLS_CGE_ENA_FORB_0* et *DLS_NO_TMR_FORB_0.*

A la date T6, l'état courant *TRANS_CRT_DLS* devient égal à la cible *OPT_DLS_CS* ; la réalisation est terminée.

Dans le cas illustré par la figure 2, la réalisation d'un l'état de la chaîne cinématique est interrompue pour des raisons prioritaires. La réactivité du système est optimisée grâce à l'application d'une durée de consolidation plus courte, pour l'adoption de l'état optimal en tant que nouvelle cible.

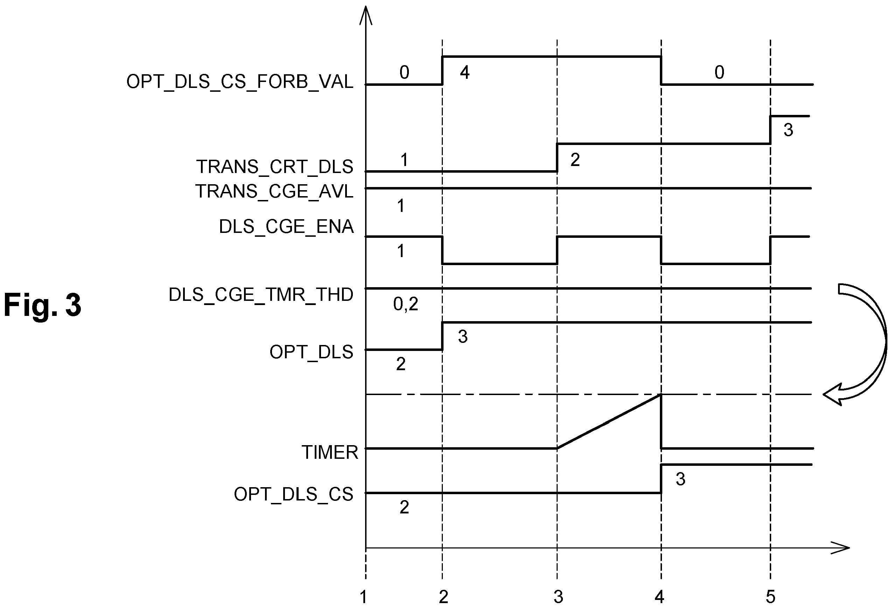

La figure 3 illustre un cas d'interdiction de changement de cible de manière à optimiser la qualité de réalisation du changement d'état en cours grâce à un séquencement approprié des requêtes.

A la date initiale T1, un changement d'état de la chaîne cinématique est en cours : *TRANS_CRT_DLS =* 1 alors que *OPT_DLS_CS = 2* ; l'état optimal *DLS_OPT* est égal à la cible consolidée *OPT_DLS_CS.*

A la date T2, la cible consolidée *OPT_DLS_CS* de valeur 2, est éliminée pour une cause d'élimination *OPT_DLS_CS_FORB_VAL* de valeur 4, liée au bruit (régime moteur thermique trop élevé par rapport à la requête de couple requis) ; la valeur de l'état optimal *OPT_DLS* évolue en passe de la valeur passant 2 à 3.

Le paramètre *DLS_CGE_ENA_FORB_*4 étant paramétré à 0, l'autorisation de changement d'état cible pendant une réalisation n'est pas donnée (*DLS_CGE_ENA = FAUX*) ; l'état optimal de la chaîne cinématique *OPT_DLS* n'est pas consolidé. Le paramètre DLS_NO_TMR_FORB_4 étant également paramétré à 0, la durée de consolidation *DLS_CGE_TMR_THD* prend la valeur nominale *DLS_CGE_TMR_NOM,* égale à 0,2s.

A la date T3, la réalisation de l'état 2, effectuée entre les dates T2 et T3, est terminée ; l'état courant *TRANS_CRT_DLS* est égal à la cible *OPT_DLS_CS.*

Entre les dates T3 et T4, la cible consolidée *OPT_DLS_CS* venant d'être réalisée est toujours interdite (*OPT_DLS_CS_FORB_VAL = 4*) ; l'autorisation de changement de cible est effective (DLS_CGE_ENA = VRAI) ; durant toute cette phase, l'état optimal *OPT_DLS* est en cours de consolidation; l'incrémentation de la durée de consolidation *TIMER* est réinitiée.

A la date T4, le *TIMER* atteint la durée minimale de consolidation *DLS_CGE_TMR_THD,* impliquant la mise à jour de la cible consolidée *OPT_DLS_CS* sur l'état optimal *OPT_DLS,* qui est de valeur 3. La transmission reçoit l'ordre de réaliser l'état *OPT_DLS_CS. OPT_DLS_CS_FORB_VAL* est mis à jour, et passe de la valeur 4 à 0 ; ce passage traduit le fait que la cible consolidée *OPT_DLS_CS* n'est pas interdite, et implique la mise à jour de *DLS_CGE_ENA* et de *DLS_CGE_TMR_THD* au travers des paramètres respectifs *DLS_CGE_ENA_FORB_0* et *DLS_NO_TMR_FORB_0.*

A la date T5, L'état courant *TRANS_CRT_DLS* devient égal à la cible *OPT_DLS_CS,* car la réalisation de celle-ci est terminée.

Dans l'exemple de la figure 3, la réalisation de l'état en cours, n'est pas interrompue : la stratégie appliquée permet d'améliorer la qualité de réalisation des états cibles, en séquençant les requêtes auprès de la transmission.

En conclusion, il faut souligner que cette stratégie est parfaitement transversale, dans la mesure où elle peut être adaptée sur tout véhicule hybride, électrique ou thermique, avec une transmission automatique à rapports discrets, pouvant réaliser au moins trois états distincts de la chaîne cinématique du véhicule. Elle nécessite peu de mise au point.

## Revendications

1. Procédé de contrôle de la cible d'une transmission automatique de véhicule au cours de la réalisation par celle-ci d'un état de la chaîne cinématique du véhicule préalablement consolidé comme cible *(OPT_DLS_CS),* **caractérisé en ce que** la durée de consolidation *(DLS_CGE_TMR_THD)* nécessaire pour que la substitution d'un état *(OPT_DLS)* devenu optimal pour la chaîne cinématique postérieurement au début de la réalisation en cours, à une cible consolidée *(OPT_DLS_CS)* en cours de réalisation soit autorisée, est déterminée en fonction de la cause d'élimination *(OPT_DLS_CS_FORB_VAL)* de la cible *(OPT_DLS_CS)* en cours de réalisation.

2. Procédé de contrôle selon la revendication 1, **caractérisé en ce que** la cause d'élimination (*OPT_DLS_CS_FORB_VAL*) d'une cible consolidée *(OPT_DLS_CS)* est prise en considération au travers de la valeur d'un paramètre de réglage *(DLS_CGE_ENA_FORB_XX) .*

3. Procédé de réglage selon la revendication 1 ou 2, **caractérisé en ce que** la cause d'élimination (*OPT_DLS_CS_FORB_VAL*) est extraite d'un vecteur (*DLS_FORB_LIST*) regroupant les causes d'élimination de l'ensemble des états de la chaîne cinématique.

4. Procédé de contrôle selon la revendication 2 ou 3 ensemble avec la revendication 2, **caractérisé en ce que** le paramètre *(DLS_NO_TMR_FORB_XX),* prend la valeur 1, si la cause d'élimination associée est prioritaire.

5. Procédé de contrôle selon la revendication 2 ou 3 ensemble avec la revendication 2, **caractérisé en ce que** le paramètre *(DLS_NO_TMR_FORB_XX),* prend la valeur 0, si la cause d'élimination associée n'est pas prioritaire.

6. Procédé de contrôle selon la revendication 4, **caractérisé en ce que** si le paramètre de réglage (*DLS_NO_TMR_FORB_Y*) a la valeur 0, la durée de consolidation (*DLS_CGE_TMR_THD)* de l'état optimal *(OPT_DLS)* est une durée nominale (*DLS_CGE_TMR_NOM).*

7. Procédé de contrôle selon la revendication 5, **caractérisé en ce que** si le paramètre de réglage (*DLS_NO_TMR_FORB_XX)* est égal à 1, la durée de consolidation *(DLS_NO_TMR_FORB_XX)* de de l'état optimal (*OPT_DLS*) prend sa valeur la plus faible (*DLS_CGE_TMR_MIN*)*.*

8. Procédé de contrôle selon l'une des revendications précédentes, **caractérisé en ce que** l'autorisation de changement de cible *(DLS_CGE_ENA)* est effective si l'ensemble des conditions suivantes sont remplies :
- la transmission autorise l'émission d'une nouvelle cible,
- un d'état de la chaîne cinématique est en cours de réalisation,
- la cause d'élimination de la cible consolidée *(OPT_DLS_CS) (OPT_DLS_CS_FORB_VAL)* est prioritaire.

9. Procédé de contrôle selon l'une des revendications précédentes, **caractérisé en ce que** l'autorisation de changement de cible *(DLS_CGE_ENA)* est donnée si aucun état n'est en cours de réalisation.

10. Procédé de contrôle selon l'une des revendications précédentes, **caractérisé en ce que** la consigne de cible consolidée *(OPT_DLS_CS)* est élaborée à partir de :
- l'état optimal *(OPT_DLS)* de la chaîne cinématique,
- l'autorisation de changement de cible d'état chaîne cinématique *(DLS_CGE_ENA),* et
- de la durée minimale de consolidation *(DLS_CGE_TMR_THD)* de l'état optimal *(OPT_DLS)* de la chaîne cinématique.

## Patentansprüche

1. Verfahren zur Steuerung des Ziels eines Fahrzeugautomatikgetriebes im Verlauf der Realisierung eines Zustands des Antriebsstrangs des Fahrzeugs durch dasselbe, der zuvor als Ziel *(OPT_DLS_CS)* konsolidiert wurde, **dadurch gekennzeichnet, dass** die erforderliche Konsolidierungsdauer *(DLS_CGE_TMR_THD)*, damit die Substitution eines Zustands (*OPT_DLS*)*,* der für den Antriebsstrang nach dem Beginn der laufenden Realisierung optimal geworden ist, durch ein in Realisierung befindliches konsolidiertes Ziel *(OPT_DLS_CS)* erlaubt wird, in Abhängigkeit von der Ursache für die Beseitigung *(OPT_DLS_CS_FORB_VAL)* des in Realisierung befindlichen Ziels *(OPT_DLS_CS)* bestimmt wird.

2. Steuerungsverfahren nach Anspruch 1, **dadurch gekennzeichnet, dass** die Ursache für die Beseitigung *(OPT_DLS_CS_FORB_VAL)* eines konsolidierten Ziels *(OPT_DLS_CS)* durch den Wert eines Regelparameters *(DLS_CGE_ENA_FORB_XX) in Betracht gezogen wird.*

3. Regelungsverfahren nach Anspruch 1 oder 2, **dadurch gekennzeichnet, dass** die Ursache für die Beseitigung *(OPT_DLS_CS_FORB_VAL)* aus einem Vektor *(DLS_FORB_LIST)* extrahiert wird, der die Beseitigungsursachen sämtlicher Zustände des Antriebsstrangs gruppiert.

4. Steuerungsverfahren nach Anspruch 2 oder 3 zusammen mit Anspruch 2, **dadurch gekennzeichnet, dass** der Parameter *(DLS_NO_TMR_FORB_XX)* den Wert 1 annimmt, wenn die zugeordnete Beseitigungsursache vorrangig ist.

5. Steuerungsverfahren nach Anspruch 2 oder 3 zusammen mit Anspruch 2, **dadurch gekennzeichnet, dass** der Parameter *(DLS_NO_TMR_FORB_XX)* den Wert 0 annimmt, wenn die zugeordnete Beseitigungsursache nicht vorrangig ist.

6. Steuerungsverfahren nach Anspruch 4, **dadurch gekennzeichnet, dass**, wenn der Regelparameter *(DLS_NO_TMR_FORB_Y)* den Wert 0 aufweist, die Konsolidierungsdauer *(DLS_CGE_TMR_THD)* des optimalen Zustands *(OPT_DLS)* eine nominale Dauer *(DLS_CGE_TMR_NOM)* ist.

7. Steuerungsverfahren nach Anspruch 5, **dadurch gekennzeichnet, dass**, wenn der Regelparameter *(DLS_NO_TMR_FORB_XX)* gleich 1 ist, die Konsolidierungsdauer *(DLS_NO_TMR_FORB_XX)* des optimalen Zustands *(OPT_DLS)* ihren niedrigsten Wert *(DLS_CGE_TMR_MIN)* annimmt.

8. Steuerungsverfahren nach einem der vorhergehenden Ansprüche, **dadurch gekennzeichnet, dass** die Erlaubnis für die Zieländerung *(DLS_CGE_ENA)* wirksam ist, wenn sämtliche der folgenden Bedingungen erfüllt sind:
- das Getriebe erlaubt die Ausgabe eines neuen Ziels,
- ein Zustand des Antriebsstrangs befindet sich Realisierung,
- die Beseitigungsursache des konsolidierten Ziels *(OPT_DLS_CS) (OPT_DLS_CS_FORB_VAL)* ist vorrangig.

9. Steuerungsverfahren nach einem der vorhergehenden Ansprüche, **dadurch gekennzeichnet, dass** die Erlaubnis für die Zieländerung *(DLS_CGE_ENA)* erteilt wird, wenn sich kein Zustand in Realisierung befindet.

10. Steuerungsverfahren nach einem der vorhergehenden Ansprüche, **dadurch gekennzeichnet, dass** die Vorgabe für das konsolidierte Ziel *(OPT_DLS_CS)* anhand von Folgendem erstellt wird:
- des optimalen Zustands *(OPT_DLS)* des Antriebsstrangs,
- der Erlaubnis für die Änderung des Zustandsziels des Antriebsstrangs *(DLS_CGE_ENA),* und
- der Mindestkonsolidierungsdauer *(DLS_CGE_TMR_THD)* des optimalen Zustands *(OPT_DLS)* des Antriebsstrangs.

## Claims

1. Method for controlling the target of an automatic vehicle transmission during the realization by the latter from a state of the drive train of the vehicle previously consolidated as target (*OPT_DLS_CS*), **characterized in that** the consolidation time *(DLS_CGE_TMR_THD)* necessary for the substitution of a state (O*PT_DLS*) that has become optimal for the drive train after the start of the current realization, to a consolidated target *(OPT_DLS_CS)* currently being realized to be authorised, is determined as a function of the cause of elimination (*OPT_DLS_CS_FORB_VAL*) of the target *(OPT_DLS_CS)* currently being realized.

2. Control method according to Claim 1, **characterized in that** the cause of elimination (*OPT_DLS_CS_FORB_VAL*) of a consolidated target *(OPT_DLS_CS)* is taken into consideration through the value of a setting parameter (*DLS_CGE_ENA_FORB_XX*).

3. Setting method according to Claim 1 or 2, **characterized in that** the cause of elimination (*OPT_DLS_CS_FORB_VAL*) is extracted from a vector *(DLS_FORB_LIST)* combining the causes of elimination of all of the states of the drive train.

4. Control method according to Claim 2 or 3 together with Claim 2, **characterized in that** the parameter (*DLS_NO_TMR_FORB_XX*), takes the value 1, if the associated cause of elimination takes priority.

5. Control method according to Claim 2 or 3 together with Claim 2, **characterized in that** the parameter (*DLS_NO_TMR_FORB_XX*) takes the value 0, if the associated cause of elimination does not take priority.

6. Control method according to Claim 4, **characterized in that**, if the setting parameter (*DLS_NO_TMR_FORB_Y*) has the value 0, the consolidation time *(DLS_CGE_TMR_THD)* of the optimal state (O*PT_DLS*) is a nominal time (*DLS_CGE_TMR_NOM*)*.*

7. Control method according to Claim 5, **characterized in that**, if the setting parameter (*DLS_NO_TMR_FORB_XX*) is equal to 1, the consolidation time (*DLS_NO_TMR_FORB_XX*) of the optimal state (O*PT_DLS*) takes its lowest value (*DLS_CGE_TMR_MIN*)*.*

8. Control method according to one of the preceding claims, **characterized in that** the authorisation to change target *(DLS_CGE_ENA)* is effective if all of the following conditions are met:
- the transmission authorises the issuing of a new target,
- a state of the drive chain is currently being realized,
- the cause of elimination of the consolidated target *(OPT_DLS_CS)* (OPT_DLS_CS_FORB_VAL) takes priority.

9. Control method according to one of the preceding claims, **characterized in that** the authorisation to change target *(DLS_CGE_ENA)* is given if no state is currently being realized.

10. Control method according to one of the preceding claims, **characterized in that** the consolidated target setpoint *(OPT_DLS_CS)* is generated from:
- the optimal state (O*PT_DLS*) of the drive train,
- the authorisation to change drive train state target *(DLS_CGE_ENA),* and
- the minimum consolidation time *(DLS_CGE_TMR_THD)* of the optimal state (O*PT_DLS*) of the drive train.
